# FASCICULE DE BREVET EUROPEEN

(11) **EP 1 607 327 B1**
(45) Date de publication et mention de la délivrance du brevet: **15.08.2007**
(21) Numéro de dépôt: 05012273.8
(22) Date de dépôt: 08.06.2005
(51) Int. Cl.: B64C 27/78

(54) **Procédé optimisé de commande de lacet d'un aéronef à voilure tournante et système pour sa mise en oeuvre**
Optimiertes Giersteuerungsverfahren für einen Drehflügler und entsprechendes System
Optimised yaw control method for rotorcraft and corresonding system

(30) Priorité: 15.06.2004 FR 0406435
(43) Date de publication de la demande: 21.12.2005
(73) Titulaire: EUROCOPTER, 13725 Marignane Cédex (FR)
(72) Inventeur: Bellera, Jacques, 13100 Aix en Provence (FR)
(74) Mandataire: Renaud-Goud, Thierry

(56) Documents cités:
- US-A- 4 493 465
- US-A- 5 188 511

## Description

La présente invention est relative à un procédé optimisé de commande de lacet d'un aéronef à voilure tournante et à un dispositif pour la mise en oeuvre de ce procédé,

Le domaine technique de l'invention est celui de la conception d'aéronefs à voilure tournante.

La présente invention est plus particulièrement relative à un procédé optimisé de commande de lacet d'un hélicoptère comportant un rotor principal ainsi qu'un rotor de queue - ou rotor arrière -, par commande d'une variation collective du pas des pales du rotor arrière.

La portance d'un hélicoptère est assurée par le rotor principal via la position de pas collectif. Dans la présente demande, l'expression « pas collectif » fait référence, sauf indication contraire, au pas collectif des pales du rotor principal.

Le pas collectif des pales du rotor principal est mesuré au niveau de la commande de pas collectif ; cette commande est issue d'un ordre du pilote sur l'organe de commande du pas collectif, mais cet ordre peut être corrigé, par un dispositif du type pilote automatique, en fonction d'autres paramètres ; il n'y a pas équivalence stricte entre la position de l'organe de commande du pas des pales du rotor principal et le pas collectif effectif de ces pales.

Le procédé et le dispositif selon l'invention utilisent en priorité une information correspondant au pas collectif effectif du rotor principal ; il est cependant possible d'utiliser une information de position de l'organe de commande de pas du rotor principal, en particulier une donnée ou un signal délivré(e) par un capteur de type potentiomètre sensible à la position du manche collectif pilote,

Le rotor arrière permet de gérer les évolutions de l'hélicoptère sur l'axe de lacet en assurant deux fonctions essentielles : la fonction de pilotage sur l'axe de lacet, et la fonction anti-couple. La fonction pilotage sur l'axe de lacet permet au pilote, en agissant sur le palonnier, de commander directement et dynamiquement les évolutions de l'hélicoptère sur son axe de lacet : rotation, prise de dérapage et/ou gestion de l'accélération latérale.

La fonction anti-couple a pour objectif de limiter, sur évolution de pas collectif, les perturbations sur l'axe de lacet, cf US 5 188 511.

Pour modifier la portance de l'hélicoptère, on modifie, via le pas collectif, l'angle d'incidence des pales du rotor principal. Cette modification génère une variation du couple exercé par le rotor principal sur l'hélicoptère. Sans action correctrice, cette variation de couple génère un effet induit sur l'aae de lacet de la machine : mise en rotation ou prise de dérapage. Pour pallier cer inconvénient, la fonction anti-couple ajuste automaciguernent la commande envoyée au rotor arrière en fonction des évolutions de la commande de pas collectif.

Cet ajustement est réalisé en positionnant (et/ou en déterminant) la commande de variation de pas des pales envoyée au rotor arrière, en fonction de la position (ou valeur) de pas collectif, selon une loi prédéfinie.

L'ordre pilote élaboré par la fonction de pilotage évolue autour de cette position statique ou «point neutre» résultant de la fonction anti-couple ; la commande de pas du rotor arrière n'étant pas nécessairement symétrique, ni centrée.

Sur un hélicoptère léger, ces deux fonctions sont généralement directement assurées par le pilote qui actionne à cet effet le palonnier, ou autre organe de commande équivalent. Aux ordres du pilote viennent éventuellement s'ajouter les ordres correctifs du système de conduite du vol (pilote automatique ou système de commandes de vol électriques).

Sur les hélicoptères lourds (par exemple 9 tonnes et plus) les variations de couple sur évolutions de pas collectif sont importantes et génèrent de forces perturbations sur l'axe de lacet. La fonction anti-couple nécessite des parts de commande lacet importantes que l'on ne peut directement gérer au palonnier (voir contraintes opérationnelles précisées ci-après). Il est donc nécessaire de dissocier ces deux fonctions en fournissant un dispositif spécifique permettant de gérer automatiquement la fonction anti-couple.

La réalisation de ces deux fonctions s'opère généralement de la manière suivante :
- la fonction anti-couple est réalisée par une boite de découplage mécanique qui applique forfaitairement au rotor arrière une commande de variation de pas proportionnelle à la mise de pas collectif sur le rotor principal ;
- la fonction pilotage sur l'axe de lacet est réalisée directement par le pilote par action sur le palonnier ; à cet ordre s'ajoutent les ordres additionnels du système de conduite du vol (pilote automatique ou système de commande de vol électriques).

Les contraintes opérationnelles pesant sur la chaîne de lacet d'un hélicoptère sont de plusieurs ordres :
- il est nécessaire, tant en vol de croisière qu'en vol stationnaire, que la position neutre du palonnier soit à peu près centrée ; ceci permet d'améliorer le confort de pilotage en évitant au pilote d'avoir un décalage statique permanent des positions de ses pieds ;
- la commande accessible au palonnier par le pilote doit permettre une manoeuvrabilité suffisante sur l'axe de lacet, notamment en stationnaire ;
- la commande accessible au palonnier par le pilote doit offrir des marges suffisantes pour tenir les contraintes de vent de travers (sur fort vent de travers, la commande lacet est fortement sollicitée pour tenir le cap) ;
- la sensibilité de commande, rapport entre le déplacement du palonnier et la commande envoyée au rotor arrière, doit être optimisée et ne peut croître de manière trop importante si l'on veut se prémunir contre les risques de pompage piloté.

Par ailleurs, sur un hélicoptère, la position d'équilibre d'un rotor arrière n'est pas identique en croisière et en stationnaire.

Le pré-positionnement de la commande arrière via la fonction anti-couple résulte donc d'un compromis délicat entre les contraintes définies précédemment.

Pour allier les contraintes mécaniques (course de palonnier) et les aspects sensibilité de commande, la commande pilote ne peut pas couvrir toutes les positions souhaitées : croisière et stationnaire (avec les marges associées). Après analyse des contraintes, une course de palonnier finale est obtenue qui fixe un compromis entre l'ergonomie (design du cockpit) et les contraintes de sensibilité de commande (risque de pompage pilote).

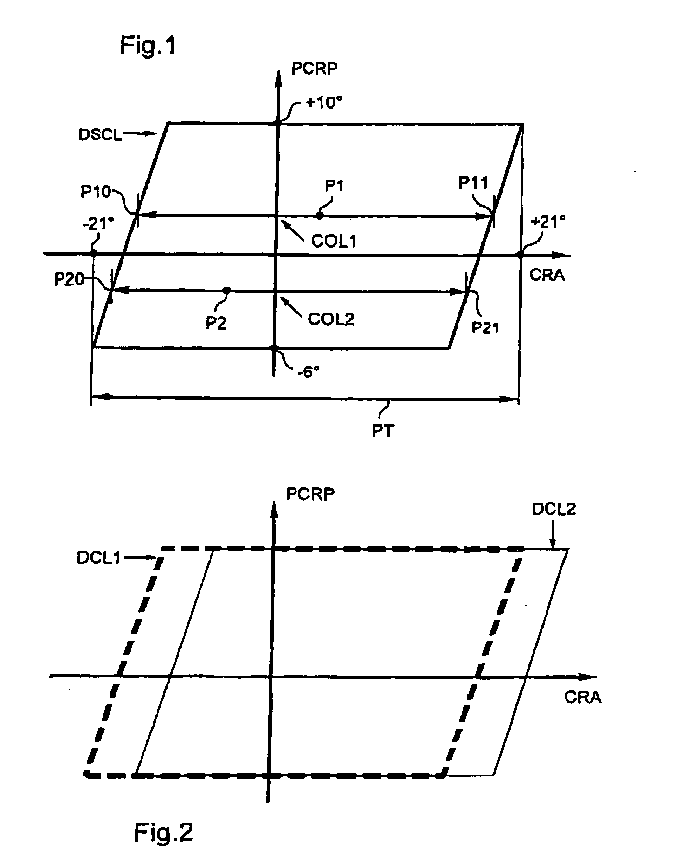

Les compromis réalisés dans les réglages actuels ne permettent généralement pas d'optimiser au mieux l'ensemble des contraintes citées précédemment et ils se traduisent généralement par l'apparition de limitations opérationnelles. Si le diagramme est optimisé pour la croisière, il sera statiquement décalé en stationnaire, ce qui aura pour conséquence une position pilote inconfortable (pieds décalés) et par voie de conséquence une limitation sur le vent de travers du côté où le pied est statiquement décalé. Si l'on souhaite récupérer de la marge de commande (tenue du vent de travers) en augmentant la plage commandée au palonnier, on se heurte rapidement aux problèmes de pompage piloté relatif a une trop forte sensibilité. La figure 2 montre la différence entre un diagramme collectif/lacet optimisé pour la croisière, qui est représenté en traits interrompus, et un diagramme optimisé pour un vol stationnaire, qui est représenté en traits pleins.

La présente invention a pour objet de proposer un procédé de commande de lacet d'un aéronef à voilure tournante et un système pour la mise en oeuvre de ce procédé, qui soient améliorés et/ou qui remédient, en partie au moins, aux inconvénients des systèmes connus de commande de lacet.

Selon un premier aspect, l'invention propose un procédé de commande du pas des pales d'un rotor arrière d'un aéronef à voilure tournante, qui comporte les opérations suivantes :
a) élaborer une commande principale du pas des pales du rotor arrière en fonction d'un « premier organe de commande » du pas des pales du rotor arrière, qui est généralement constitué par le palonnier et qui est actionné par un pilote de l'aéronef,
b) élaborer une commande de découplage « pas collectif/lacet » en fonction du pas collectif des pales de la voilure tournante,
c) élaborer un biais (ou ordre) de commande variable en fonction de la vitesse de vol (déplacement) de l'aéronef et du pas collectif du rotor arrière, en particulier en fonction de la vitesse de vol et de la position du premier organe de commande, et
d) ajouter le biais de commande à ladite commande de découplage et à ladite commande principale pour obtenir une commande globale de lacet et commander une variation collective du pas des pales du rotor arrière en fonction de cette commande globale.

De préférence, le biais de commande est en outre élaboré en fonction du pas collectif du rotor principal, en particulier en fonction de la position d'un second organe de commande actionné par le pilote pour la commande dudit pas collectif du rotor principal de l'aéronef.

De préférence également, la variation du biais de commande en fonction de la vitesse, la variation du biais en fonction de ladite position du premier organe de commande, et/ou la variation du biais en fonction de ladite position du second organe de commande suit (suivent) une (des) fonction(s) de limitation sensiblement monotone(s), dont le graphe peut être constitué de rampes ou tronçons linéaires ou exponentiels.

Selon un autre aspect de l'invention, il est proposé un système de commande (globale), de lacet d'un aéronef à voilure tournante comportant un rotor principal et un rotor arrière, qui comporte des moyens de découplage prévus pour délivrer une commande de découplage, des moyens d'élaboration d'une commande principale de lacet en fonction de la position d'un premier organe de commande de lacet ; le système comporte en outre des moyens de détermination d'un biais de commande en fonction de la commande (globale ou principale) de lacet, de la vitesse de l'aéronef et de préférence du pas collectif, ainsi que des moyens de sommation pour ajouter le biais à ladite commande de découplage et à ladite commande principale pour obtenir une commande globale du pas des pales du rotor arrière.

De préférence, les moyens de détermination d'un biais comportent des moyens (CL1, CL2, CL3) pour limiter le biais pour certaines plages de valeurs (en particulier pour des valeurs extrêmes) de la vitesse, pour certaines plages de valeurs (ou pour des valeurs eatrémes) de la position de l'organe de commande de lacet et/ou de la commande globale de lacet, et/ou pour des valeurs extrêmes de la position d'un second organe (4a) de commande de pas collectif du rotor principal, et/ou pour des valeurs d'un signal ou d'une donnée représentative du pas collectif du rotor principal; les moyens de détermination d'un biais peuvent être intégrés à un calculateur de commandes de vol électriques relié à des transducteurs délivrant des signaux ou données de positions des organes de commande de lacet et de pas collectif actionnés par le pilote de l'aéronef, ainsi qu'à des servocommandes de réglage du pas des pales du rotor arrière.

Les moyens de détermination de ce biais peuvent être intégrés de la même manière sur un aéronef doté de commandes de vol classiques et d'un pilote automatique (PA « 3 axes » ou PA « 4 axes ») commandant le lacet; dans le cas de l'application de l'invention à un aéronef doté d'un système de commandes mécaniques, un vérin spécifique est prévu sur l'axe de lacet pour l'application du biais de commande : il peut s'agir d'un vérin additionnel ou bien d'un vérin spécialement adapté à cet effet.

D'autres caractéristiques et avantages de l'invention apparaissent dans la description détaillée suivante, qui se réfère aux dessins annexes, et qui illustre, sans aucun caractère limitatif, des modes préférentiels de réalisation de l'invention.
La figure 1 illustre un exemple de diagramme de commande collectif/lacet ayant la forme d'un parallélogramme.
La figure 2 illustre deux diagrammes de commande collectif/lacet ayant la forme d'un parallélogramme, qui sont superposés et ont été respectivement optimisés pour un hélicoptère en vol stationnaire et pour le même hélicoptère en vol de croisière.
La figure 3 illustre un synoptique généxal d'un système de commandes de vol électriques.
La figure 4 illustre un système de commande de vol électriques incluant des moyens de calcul de biais conformément à l'invention.
La figure 5 est un graphe illustrant une fonction de limitation du biais de commande en fonction de la vitesse de déplacement de l'aéronef.
La figure 6 est un graphe illustrant une fonction de limitation du biais de commande en fonction de la position de palonnier.
Chacune des figures 7 et 8 représente un diagramme résultant, en stationnaire, de l'application des limitations des figures 5 et 6, en incluant le biais conformément à l'invention.
La figure 9 est un graphe illustrant une fonction de limitation du biais de commande en fonction de la position de l'organe de commande du pas collectif.

Conformément à un aspect de l'invention, on optimise le diagramme collectif / lacet en lui ajoutant un biais de commande évolutif qui est fonction à la fois du cas de vol mais aussi de la position des commandes pilotes.

Par référence aux figures 1, 2, 7 et 8, l'axe des abscisses représente l'amplitude d'une commande de rotor arrière CRA d'un hélicoptère, tandis que l'axe des ordonnées représente l'amplitude du pas collectif du rotor principal PCRP.

Sur le diagramme de la figure 1, la plage de commande P1 du rotor arrière accessible au pilote (et au système de conduite du vol) pour une position de collectif COL1, s'étend entre une commande minimale P10 et une commande maximale P11. Pour une position de collectif COL2, la plage de commande du rotor arrière accessible par le pilote est la plage P2 qui s'étend entre une commande minimale P20 et une commande maximale P21. Le passage de P1 à P2 par évolution du collectif de COL1 à COL2 se fait suivant la pente du parallélogramme. Le découplage statique collectif/lacet DSCL matérialise sur ce diagramme la pente du parallélogramme, La plage totale du rotor arrière PT est balayée lorsque l'on fait varier le collectif sur la totalité de sa course ; à titre indicatif, le pas collectif PCRP s'étend dans une plage allant de (-6°) à (+10°), tandis que la commande CRA s'étend dans une plage PT allant de (-21°) à (+21°).

Par référence à la figure 2, le diagramme collectif/lacet DCL1 qui est optimisé pour une première plage de vitesse (de croisière) prédéterminée et qui est illustré en traits gras interrompus, diffère du diagramme collectif/lacet DCL2 optimisé pour le même hélicoptère et pour une seconde plage de vitesse différente de la première, en particulier pour une vitesse nulle : les plages de commande du pas du rotor arrière, pour un pas collectif donné, sont différentes, pour ladite vitesse de croisière, des plages correspondantes de commande pour une vitesse nulle ; les deux diagrammes en forme de parallélogramme sont mutuellement décalés selon l'axe des abscisses.

La description suivante se réfère à l'application de l'invention à un hélicoptère équipé d'un système de commandes de vol électriques ; l'invention peut également être appliquée à un système mécanique équipé de vérins spécifiques sur l'axe de lacet.

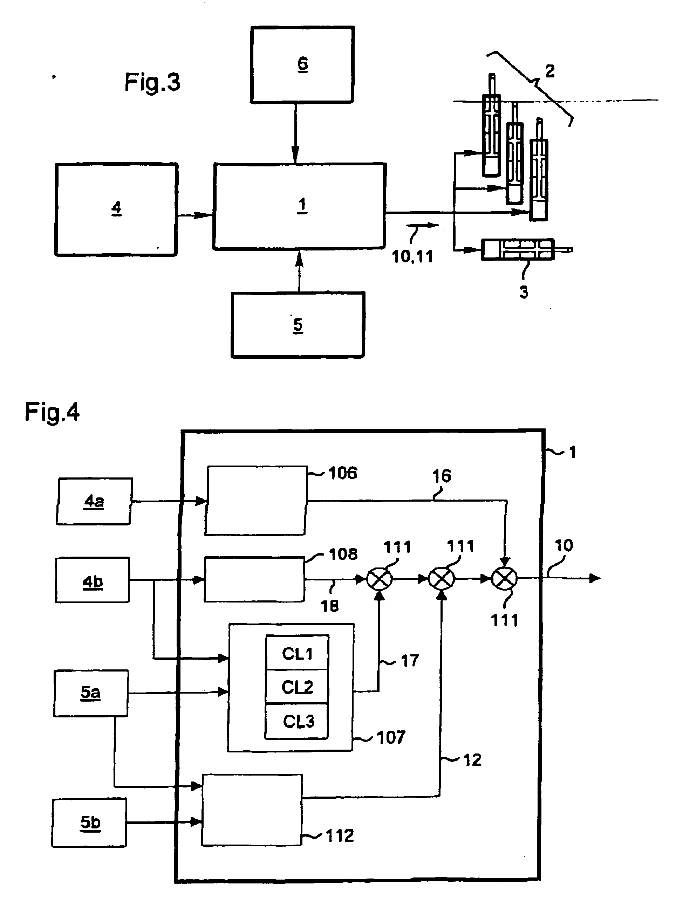

Par référence à la figure 3, un système de conduite du vol réalisé par des commandes de vol électriques comporte un calculateur 1 qui élabore des ordres envoyés aux servocommandes du rotor principal 2 et arrière 3 en fonction des ordres pilotes 4 (signaux représentatifs de la position du manche cyclique, du manche collectif, du palonnier, de boutons), d'informations captées 5, 5a, 5b (notamment vitesse longitudinale, assiettes, vitesses angulaires) et d'informations émises par d'autres systèmes 6.

Par référence aux figures 3 et 4, le calculateur de commande de vol 1 élabore une commande globale de lacet 10 à partir : i) de signaux électriques délivrés par des transducteurs de position équipant le manche 4a de pas collectif et le palonnier 4b ; ii) le cas échéant à partir des contributions des fonctions 112 d'aide au pilotage (stabilisation, tenues de paramètres, ...) ; et iii) d'une fonction anti-couple 106 ; cette fonction anti-couple, qui peut être réalisée par une boîte de transmission mécanique sur un appareil à commandes de vol mécaniques, est ici réalisée par une fonction de découplage 106 incluse dans le calculateur de commande de vol 1 , qui délivre une commande 16 de découplage collectif/lacet; cette fonction fixe la pente du parallélogramme représentant le diagramme collectif / lacet.

L'exemple présenté dans ce document correspond au cas d'un diagramme collectif/lacet optimisé pour la croisière et sur lequel un biais variable 17 est appliqué dans l'élaboration de la commande globale de lacer 10 pour améliorer les performances en stationnaire. Alternativement, à partir d'un digtamme collectif/lacet optimisé pour le stationnaire, il est possible de prévoir un biais évolutif pour améliorer le comportement en croisière, selon le même principe, la forme des limitations étant adaptée au cas retenu.

Ce biais évolutif 17 délivre par un module 107 de calcul de biais s'ajoute (par un sommateur 111) à la commande pilote 18 délivrée par un module 108, et entraîne de manière induite une modification de la position statique du palonnier 4b en corrigeant, en stationnaire, le décalage statique du diagramme collectif / lacet optimisé pour la croisière. Ce biais, peut être adapté à tous les types de cas spécifiques rencontrés sur hélicoptère (ou autres). Pour ce faire des fonctions CL1, CL2 et CL3 de limitation sont implantées dans le module 107 de calcul de biais du calculateur 1.

Les limitations détaillées ci-après sont élaborées pour un diagramme optimisé pour la croisière et donc un biais évolutif vers le stationnaire ; une première limite CL1 varie en fonction de la vitesse longitudinale de l'appareil ; une seconde limite CL2 varie en fonction de la position de palonnier.

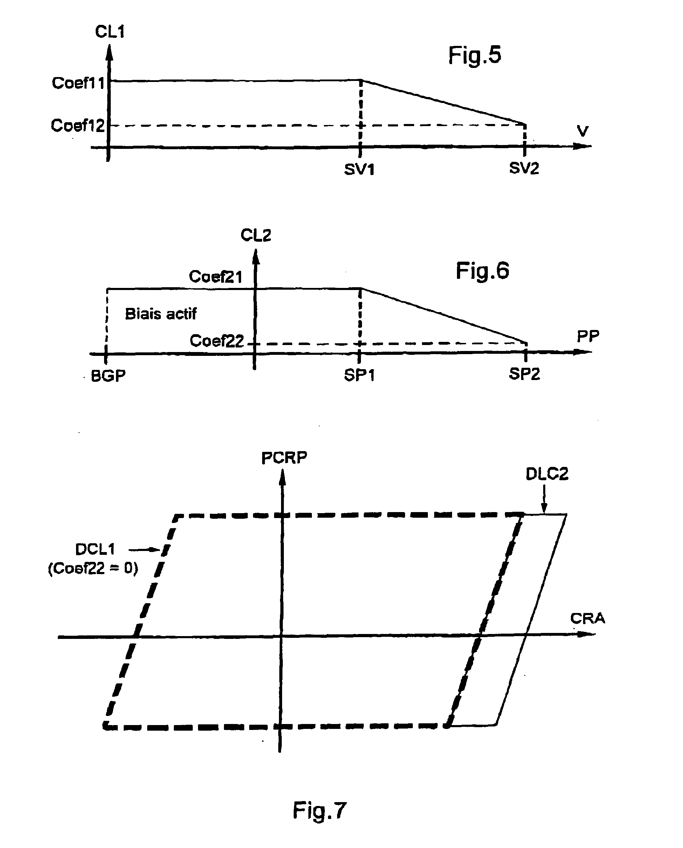

La figure 5 présente les caractéristiques de la limitation CL1 qui rend le biais évolutif en fonction de la vitesse.

Dans l'exemple présenté figure 5, le biais est actif en stationnaire et vaut la valeur COEF11, il évolue progressivement vers la valeur COEF12 par l'intermédiaire d'un coefficient de limitation CL1 évoluant linéairement (ou de toute autre manière) en fonction de la vitesse V (en abscisse) ; ce coefficient est constant (il vaut COEF11) pour des vitesses proches du stationnaire, et commence à décroître à partir d'une première valeur SV1 de vitesse longitudinale lors d'une phase d'accélération, du stationnaire vers la croisière. Le coefficient de limitation CL1 vaut COEF12 dès l'instant ou la vitesse V atteint la valeur d'un autre seuil SV2. La loi d'évolution, de préférence linéaire, est choisie de sorte que la disparition du biais en fonction de la vitesse soit suffisamment progressive pour ne pas gêner le pilote ni perturber les fonctions d'aide au pilotage pendant la phase d'accélération. Ce type de limitation évolutive permet d'optimiser le diagramme collectif / lacet sur tout le domaine de vitesse de l'hélicoptère concerné.

Par référence à la figure 6, afin d'optimiser la commande, il peut être nécessaire de rendre le biais dissymétrique en fonction de la position PP (en abscisse) du palonnier. Un biais symétrique ajouterait de la commande sur l'un des côtés du diagramme mais en retirerait sur le côté opposé. L'instauration d'une limitation CL2 qui modifie progressivement le biais en fonction de la position du palonnier permet d'optimiser la commande lacet en stationnaire. Cette limitation est constituée par un coefficient de limitation CL2 qui vaut COEF21, pour des positions de palonnier inférieures à un seuil SP1 et qui décroît progressivement vers COEF22 lorsque l'on s'approche d'une valeur de palonnier SP2. Les valeurs des seuils et des coefficients (COEF21 et COEF22) sont choisies afin de minimiser, lors de la décroissance du biais, l'impact de la variation de sensibilité de commande associée.

La figure 7 représente le diagramme résultant, en stationnaire, incluant le biais variable selon la présente invention.

Le diagramme en pointillé représente le diagramme en croisière. La transition entre les 2 diagrammes est gérée par les limitations CL1 et CL2.

Dans le cas particulier où, pour des contraintes spécifiques de l'appareil (par exemple des contraintes mécaniques), la plage de servocommande arrière ne permet pas d'avoir la plage de commande suffisante pour réaliser le diagramme complet, des troncatures apparaissent.

Ces tzancatures appliquées au diagramme collectif/lacet engendrent des plages mostes au niveau du palonnier. Une troisième fonction CL3 de limitation en fonction du pas collectif peut être prévue en plus des limitations CL1 et CL2 décrites précédemment, pour corriger cet effet si la plage morte est jugée gênante dans la troncature.

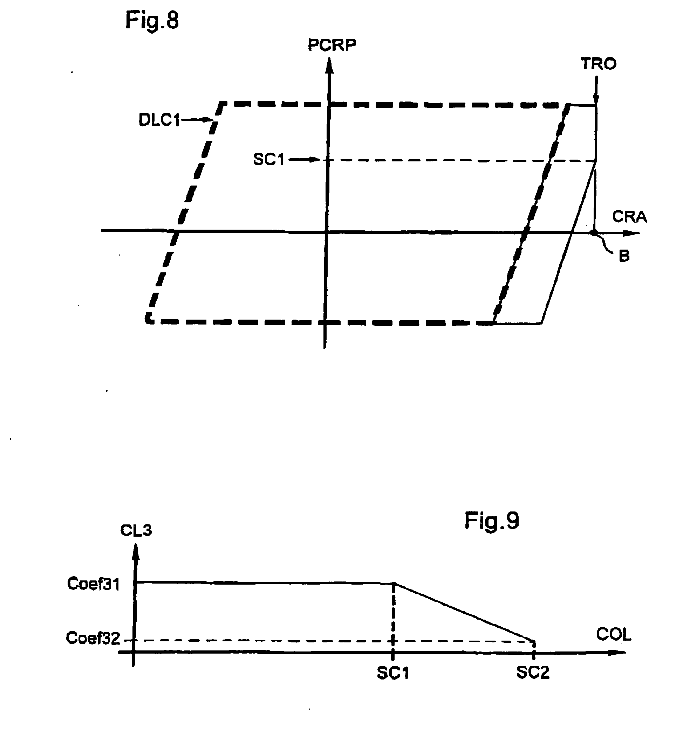

La figure 8 présente ce cas de figure. La troncature TRO apparaît pour un seuil de collectif SC1.

La limitation illustrée figure 9 est obtenue par un coefficient de limitation CL3 qui vaut COEF31 dans l'exemple présenté tant que le pas collectif COL est inférieur à une valeur SC1. Il décroît en fonction de l'augmentation du pas collectif vers une valeur COEF32 lorsque le pas collectif COL atteint la valeur seuil SC2 ; ce seuil peut être la valeur maximale du pas collectif par exemple.

Le biais et les fonctions de limitations associées peuvent être calculées à partir d'informations extérieures au système hébergeant l'invention. En cas de panne, un dispositif spécifique de traitement du biais (mise à zéro ou à une valeur particulière) permet de retrouver un diagramme/collectif lacet prédéterminé qui est suffisamment robuste pour permettre la poursuite du vol.

Grâce à la présence du biais évolutif, l'invention permet d'optimiser au mieux l'ensemble des contraintes pesant sur la définition de la chaîne de commande lacet : i) le biais évolutif permet de décaler artificiellement la position statique du palonnier en la recentrant (effet ergonomique) ; ii) ce biais permet d'optimiser sans contraintes la sensibilité du palonnier (limitation des risques de pompage piloté) ; iii) le biais évolutif permet également de récupérer de la commande lacet sur le côté qui, en stationnaire pour l'exemple présenté, était défavorisé, sans perdre pour autant de la commande sur le côté opposé (amélioration des performances opérationnelles).

Ceci a pour conséquence d'avoir des performances augmentées en cumulant les avantages des deux positionnements du diagramme collectif/lacet (croisière et stationnaire) sans modifier la plage de commande rotor accessible au palonnier (minimisation du risque de pompage).

## Revendications

1. - Procédé de commande du pas des pales d'un rotor arrière d'un aéronef à voilure tournante, qui comporte les opérations suivantes :
a) élaborer une commande principale (18) du pas des pales du rotor arrière en fonction d'un organe (4b) de commande du pas des pales du rotor arrière qui est actionné par un pilote de l'aéronef,
b) élaborer une commande de découplage (16) pas collectif/lacet en fonction du pas collectif de la voilure tournante,
procédé **caractérisé par** les opérations supplémentaires suivantes :
c) élaborer un biais de commande (17) variable en fonction de la vitesse (V) de vol de l'aéronef et de la commande principale ou globale et/ou de la position (PP) de l'organe (4b) de commande, et
d) ajouter (111) le biais à ladite commande de découplage et à ladite commande principale pour obtenir une commande globale (10) et commander le pas des pales du rotor arrière.

2. - Procédé selon la revendication 1 dans lequel le biais est en outre élaboré en fonction du pas collectif du rotor principal, en particulier en fonction (COL) de la position d'un second organe (4a) de commande actionné par le pilote pour la commande du pas collectif du rotor principal.

3. - Procédé selon la revendication 1 ou 2 dans lequel la variation (CL1) du biais en fonction de la vitesse (V) s'effectue à partir d'un seuil (SV1, SV2).

4. - Procédé selon l'une quelconque des revendications 1 à 3 dans lequel la variation (CL1) du biais en fonction de la vitesse (V) s'effectue selon une rampe linéaire ou exponentielle.

5. - Procédé selon l'une quelconque des revendications 1 à 4 dans lequel la variation du biais en fonction de la vitesse de vol, en fonction de la commande principale (18) ou de la position de l'organe (4b) de commande de lacet, et/ou en fonction du pas collectif, suit (suivent) une (des) fonction(s) monotone(s).

6. - Procédé selon l'une quelconque des revendications 1 à 5 dans lequel la variation (CL2) du biais en fonction de la commande principale et/ou de la position du premier organe de commande est dissymétrique.

7. - Procédé selon l'une quelconque des revendications 1 à 6 dans lequel la variation (CL2) du biais en fonction de la position du premier organe de commande est linéaire entre deux valeurs (SP1, SP2).

8. - Procédé selon l'une quelconque des revendications 2 à 5 dans lequel la variation (CL3) du biais en fonction de la position du second organe de commande est linéaire entre deux valeurs (SC1, SC2).

9. - Système de commande de lacet d'un aéronef à voilure tournante comportant un rotor principal et un rotor arrière, qui comporte des moyens (106) de découplage prévus pour délivrer une commande de découplage (16), des moyens (108) d'élaboration de commande pilote délivrant une commande principale (18) en fonction de la position d'un organe (4b) de commande de lacet, **caractérisé en ce qu'**il comporte en outre des moyens (107) de détermination d'un biais (17) de commande en fonction de la commande de lacet et de la vitesse de l'aéronef, et des moyens (111) de sommation pour ajouter le biais à ladite commande de découplage et à ladite commande principale pour obtenir une commande globale (10) du pas des pales du rotor arrière.

10. - Système selon la revendication 9 dans lequel les moyens (107) de détermination d'un biais comportent des moyens (CL1) pour limiter le biais pour des plages de valeurs de la vitesse.

11. - Système selon la revendication 9 ou 10 dans lequel les moyens (107) de détermination d'un biais comportent des moyens (CL2) pour limiter le biais pour des plages de valeurs de commande de lacet.

12. - Système selon l'une quelconque des revendications 9 à 11 dans lequel les moyens (107) de détermination d'un biais comportent des moyens (CL3) pour limiter le biais pour des plages de valeurs de commande de pas collectif du rotor principal.

13. - Système selon l'une quelconque des revendications 9 à 12 dans lequel les moyens (107) de détermination d'un biais sont intégrés à un calculateur (1) de commandes de vol électriques.

14. - Système selon la revendication 13 dans lequel les moyens (106) de découplage et les moyens (108) d'élaboration d'une commande principale sont intégrés au calculateur (1) de commandes de vol électriques qui est relié à des transducteurs délivrant des signaux ou données de positions des organes (4a, 4b) de commande de lacet et de pas collectif actionnés par le pilote de l'aéronef, ainsi qu'à des servocommandes (3) de réglage du pas des pales du rotor arrière.

15. - Système selon l'une quelconque des revendications 9 à 12 qui est relié à des commandes de vol mécaniques comportant un vérin spécifique sur l'axe de lacet, à savoir un vérin additionnel ou bien un vérin spécialement adapté.

## Claims

1. A method of controlling the pitch of blades of a tail rotor of a rotor aircraft, which includes the following operations :
a) generating a main control (18) of the pitch of the blades of the tail rotor as a function of a member (4b) for controlling the pitch of the blades of the tail rotor, which is actuated by a pilot of the aircraft,
b) generating a control (16) for decoupling the collective pitch and the yaw as a function of the collective pitch of the rotor,
the method being **characterised by** the following additional operations:
c) generating a bias control (17) which is variable as a function of the speed of flight (V) of the aircraft and as a function of the main or overall control and/or the position (PP) of the control member (4b), and
d) adding (111) the bias to the said decoupling control and the said main control in order to obtain an overall control (10) and to control the pitch of the blades of the tail rotor.

2. A method according to Claim 1, in which the bias is further generated as a function of the collective pitch of the main rotor, in particular as a function (COL) of the position of a second control member (4a) actuated by the pilot to control the collective pitch of the main rotor.

3. A method according to Claim 1 or 2, in which the variation (CL1) of the bias as a function of the speed (V) is performed above a threshold (SV1, SV2).

4. A method according to any one of Claims 1 to 3, in which the variation (CL1) of the bias as a function of the speed (V) is performed in accordance with a linear or exponential function.

5. A method according to any one of Claims 1 to 4, in which the variation of the bias as a function of the speed of flight, as a function of the main control (18) or the position of the yaw control member (4b), and/or as a function of the collective pitch, follow(s) a monotonic function or functions.

6. A method according to any one of Claims 1 to 5, in which the variation (CL2) of the bias as a function of the main control and/or the position of the first control member is asymmetric.

7. A method according to any one of Claims 1 to 6, in which the variation (CL2) of the bias as a function of the position of the first control member is linear between two values (SP1, SP2).

8. A method according to any one of Claims 2 to 5, in which the variation (CL3) of the bias as a function of the position of the second control member is linear between two values (SC1, SC2).

9. A system for controlling the yaw of a rotor aircraft including a main rotor and a tail rotor, which includes means (106) for decoupling which are provided to deliver a decoupling control (16), with means (108) for generating a pilot control delivering a main control (18) as a function of the position of a yaw control member (4b),
**characterised in that** it further includes means (107) for determining a control bias (17) as a function of the yaw control and the speed of the aircraft, and summing means (111) for adding the bias to the said decoupling control and the said main control in order to obtain an overall control (10) of the pitch of the blades of the tail rotor.

10. A system according to Claim 9, in which the means (107) for determining a bias include means (CL1) for limiting the bias over ranges of speed values.

11. A system according to Claim 9 or 10, in which the means (107) for determining a bias include means (CL2) for limiting the bias over ranges of yaw control values.

12. A system according to any one of Claims 9 to 11, in which the means (107) for determining a bias include means (CL3) for limiting the bias over ranges of control values of the collective pitch of the main rotor.

13. A system according to any one of Claims 9 to 12, in which the means (107) for determining a bias are integrated within an electrical flight control processor (1).

14. A system according to Claim 13, in which the means (106) for decoupling and the means (108) for generating a main control are integrated within the electrical flight control processor (1), which is connected to transducers delivering signals or data on the positions of the members (4a, 4b) for controlling yaw and collective pitch, which are actuated by the pilot of the aircraft, and to servo control means (3) for adjusting the pitch of the blades of the tail rotor.

15. A system according to any one of Claims 9 to 12, which is connected to mechanical flight controls including a specific actuator on the yaw axis, namely an additional actuator or a specially adapted actuator.

## Patentansprüche

1. Verfahren zur Steuerung der Blatteinstellwinkels eines Heckrotors eines Drehflügelflugzeugs, das die folgenden Vorgänge aufweist:
a) Ausarbeiten einer Hauptsteuerung (18) des Blatteinstellwinkels des Heckrotors in Abhängigkeit von einem Organ (4b) zur Steuerung des Blatteinstellwinkels des Heckrotors, das von einem Piloten des Flugzeugs betätigt wird,
b) Ausarbeiten einer Abkopplungssteuerung (16) kollektiver Blatteinstellwinkel/ Gieren in Abhängigkeit vom kollektiven Blatteinstellwinkel des Drehflügels,
wobei das Verfahren durch die folgenden zusätzlichen Vorgänge **gekennzeichnet** ist:
c) Ausarbeiten eines Steuer-Bias (17), der in Abhängigkeit von der Fluggeschwindigkeit (V) des Flugzeugs und der Haupt- oder globalen Steuerung und/oder der Position (PP) des Steuerorgans (4b) variabel ist, und
d) Hinzufügen (111) des Bias zur Abkopplungssteuerung und zur Hauptsteuerung, um eine globale Steuerung (10) zu erhalten und den Blatteinstellwinkel des Heckrotors zu steuern.

2. Verfahren nach Anspruch 1, bei dem der Bias außerdem in Abhängigkeit vom kollektiven Blatteinstellwinkel des Hauptrotors, insbesondere in Abhängigkeit (COL) von der Position eines zweiten Steuerorgans (4a) ausgearbeitet wird, das vom Piloten zur Steuerung des kollektiven Blatteinstellwinkels des Hauptrotors betätigt wird.

3. Verfahren nach Anspruch 1 oder 2, bei dem die Veränderung (CL1) des Bias in Abhängigkeit von der Geschwindigkeit (V) ausgehend von einem Schwellwert (SV1, SV2) durchgeführt wird.

4. Verfahren nach einem der Ansprüche 1 bis 3, bei dem die Veränderung (CL1) des Bias in Abhängigkeit von der Geschwindigkeit (V) gemäß einer linearen oder exponentiellen Rampe erfolgt.

5. Verfahren nach einem der Ansprüche 1 bis 4, bei dem die Veränderung des Bias in Abhängigkeit von der Fluggeschwindigkeit, in Abhängigkeit von der Hauptsteuerung (18) oder der Position des Giersteuerungsorgans (4b) und/oder in Abhängigkeit vom kollektiven Blatteinstellwinkel einer monotonen Funktion folgt (folgen).

6. Verfahren nach einem der Ansprüche 1 bis 5, bei dem die Veränderung (CL2) des Bias in Abhängigkeit von der Hauptsteuerung und/oder der Position des ersten Steuerorgans unsymmetrisch ist.

7. Verfahren nach einem der Ansprüche 1 bis 6, bei dem die Veränderung (CL2) des Bias in Abhängigkeit von der Position des ersten Steuerorgans zwischen zwei Werten (SP1, SP2) linear ist.

8. Verfahren nach einem der Ansprüche 2 bis 5, bei dem die Veränderung (CL3) des Bias in Abhängigkeit von der Position des zweiten Steuerorgans zwischen zwei Werten (SC1, SC2) linear ist.

9. System zur Giersteuerung eines Drehflügelflugzeugs mit einem Hauptrotor und einem Heckrotor, das Mittel (106) zur Abkopplung, die vorgesehen sind, um eine Abkopplungssteuerung (16) zu liefern, und Mittel (108) zur Ausarbeitung einer Pilotsteuerung aufweist, die eine Hauptsteuerung (ta) in Abhängigkeit von der Position eines Giersteuerungsorgans (4b) liefern, **dadurch gekennzeichnet, dass** es außerdem Mittel (107) zur Bestimmung eines Steuer-Bias (17) in Abhängigkeit von der Giersteuerung und der Geschwindigkeit des Luftfahrzeugs und Summiermittel (111) aufweist, um den Bias zur Abkopplungssteuerung und zur Hauptsteuerung hinzuzufügen, um eine globale Steuerung (10) des Blatteinstellwinkels des Heckrotors zu erhalten.

10. System nach Anspruch 9, bei dem die Mittel (107) zur Bestimmung eines Bias Mittel (CL1) aufweisen, um den Bias für Geschwindigkeits-Wertebereiche zu begrenzen.

11. System nach Anspruch 9 oder 10, bei dem die Mittel (107) zur Bestimmung eines Bias Mittel (CL2) aufweisen, um den Bias für Giersteuerungs-Wertebereiche zu begrenzen.

12. System nach einem der Ansprüche 9 bis 11, bei dem die Mittel (107) zur Bestimmung eines Bias Mittel (CL3) aufweisen, um den Bias für kollektive Blatteinstellwinkelsteuerungs-Wertebereiche des Hauptrotors zu begrenzen.

13. System nach einem der Ansprüche 9 bis 12, bei dem die Mittel (107) zur Bestimmung eines Bias in einen Rechner (1) elektrischer Flugsteuerungen integriert sind.

14. System nach Anspruch 13, bei dem die Abkopplungsmittel (106) und die Mittel (108) zur Ausarbeitung einer Hauptsteuerung in den Rechner (1) elektrischer Flugsteuerungen integriert sind, der mit Wandlern, die Positionssignale oder -daten der Organe (4a, 4b) zur Giersteuerung und zur kollektiven Blatteinstellwinkelsteuerung liefern, die vom Piloten des Flugzeugs betätigt werden, sowie mit Servosteuerungen (3) zur Regelung des Blatteinstellwinkels des Heckrotors verbunden ist.

15. System nach einem der Ansprüche 9 bis 12, das mit mechanischen Flugsteuerungen verbunden ist, die eine spezifischen Arbeitszylinder auf der Gierachse aufweisen, nämlich einen zusätzlichen Arbeitszylinder oder auch einen speziell angepassten Arbeitszylinder.
